# EUROPÄISCHE PATENTSCHRIFT

(11) **EP 2 507 687 B1**
(45) Veröffentlichungstag und Bekanntmachung des Hinweises auf die Patenterteilung: **15.02.2017**
(21) Anmeldenummer: 11726689.0
(22) Anmeldetag: 13.04.2011
(51) Int. Cl.: G06F 3/02, G06F 3/023

(54) **EINGABEVORRICHTUNG**
INPUT APPARATUS
DISPOSITIF D'ENTRÉE

(30) Priorität: 23.02.2011 DE 102011000899
(43) Veröffentlichungstag der Anmeldung: 10.10.2012
(73) Patentinhaber: Trobrillant, Jean Marc, 76131 Karlsruhe (DE)
(72) Erfinder: Trobrillant, Jean Marc, 76131 Karlsruhe (DE)
(74) Vertreter: Durm & Partner
(86) Internationale Anmeldenummer: PCT/DE2011/075073
(87) Internationale Veröffentlichungsnummer: WO 2012/113363

(56) Entgegenhaltungen:
- EP-A1- 0 196 929
- WO-A1-92/22864
- WO-A1-2008/065195
- WO-A1-2010/030279
- DE-A1- 19 758 403
- FR-A1- 2 907 927
- US-A1- 2006 132 449

## Beschreibung

Die vorliegende Erfindung betrifft eine Eingabevorrichtung mit einem ein Anzeigemittel übergreifenden, transparenten Tastenblock bestehend aus einer Mehrzahl transparenter Tasten, wobei den Tasten des Tastenblocks Funktionen zugeordnet sind, welche mithilfe von unter der jeweiligen Taste auf einem dieser zugeordneten Bereich des Anzeigemittels dargestellten Zeichen repräsentiert werden, und wobei der Tastenblock und das Anzeigemittel in einem gemeinsamen Gehäuse derart aufgenommen sind, dass das Anzeigemittel dem Tastenblock lösbar zugeordnet ist.

Eine derartige Eingabevorrichtung ist bereits aus dem US-Patent 4,633,227 bekannt. Eine solche Eingabevorrichtung in Form einer Computertastatur besitzt Tasten, welche durch ein Tastenfenster den Blick auf ein darunter liegendes Anzeigemittel aus Kunststoff freigeben, welches über ein Stellrad in verschiedene Positionen verfahren werden kann. Je nach Position werden unterschiedliche Bereiche des Anzeigemittels sichtbar, so dass mehrere unterschiedliche Layouts erreicht werden können. Ein Herausnehmen und Umdrehen des Anzeigemittels ist hierbei ebenfalls möglich, um zusätzliche Layouts zu ermöglichen. Die Position des Stellrads gibt dabei an, welches Layout gerade gewählt wurde, so dass die entsprechenden Tastensignale an einen angeschlossenen Rechner übertragen werden.

Eine weitere, ähnliche Eingabevorrichtung ist ferner aus der US-Patentanmeldung US 2003/0128191 A1 bekannt. Die fragliche Offenlegungsschrift betrifft eine Eingabevorrichtung mit einem herkömmlichen Computerbildschirm, wobei dem fraglichen Computerbildschirm eine transparente Tastatur zugeordnet ist.

Hierbei ist vorgesehen, auf dem Bildschirm einen Abschnitt für eine Tastatur vorzusehen, welcher dann anstelle der Ausbildung eines Touchscreen-Bildschirmabschnitts über erhabene, gefederte Tastenelemente verfügt. Auf diese Weise wird dem Benutzer bei einem Tastendruck ein Feedback gegeben, so dass der Benutzer den Tastendruck neben optischen und gegebenenfalls auch akustischen Hinweisen zusätzlich auch haptisch bzw. taktil wahrnimmt. Dadurch, dass die transparenten Tasten den Bildschirm teilweise übergreifen, kann unterhalb der Tasten auf dem Bildschirm ein Symbol dargestellt werden, welches durch die Oberfläche der Tasten hindurch vom Benutzer wahrgenommen wird. Dieses Symbol identifiziert die Funktion der fraglichen, darüberliegenden Taste, so dass mit wechselnden Funktionen der Tasten durch eine Veränderung der Bildschirmanzeige unterhalb der Taste deren Kennzeichnung bedarfsweise angepasst werden kann.

Ähnliches wurde auch aus der deutschen Patentschrift DE 40 17 897 C1 offenbart. In einem Bedienpanel eines Fahrzeugs ist ein Bildschirm mit durchsichtig gestalteten Tasten und Schiebern vorgesehen, welche den Bildschirm überlagern. Abhängig von dem aktuellen Betriebsmodus ändert sich die Darstellung auf dem Bildschirm, so dass die Taste aus Sicht des betrachtenden Benutzers eine andere Funktion erhält.

Das Grundsätzliche, zu Grunde liegende Problem besteht also darin, dass einer Taste durchaus mehrere Funktionen zugeordnet sein können, teilweise auch abhängig von benutzter Software, welche aber für den Benutzer nicht ohne weiteres erkennbar sind. Es bleibt dem Benutzer insoweit nichts anderes übrig, als bei herkömmlichen Tastaturen bzw. Schaltelementen die jeweiligen verschiedenen Tastenkombinationen bzw. dahinterstehenden Funktionen zu kennen, nachzulesen oder auszuprobieren.

Vor diesem Hintergrund entstand bereits im Jahre 1983 die deutsche Patentanmeldung DE 83 03 605, welche eine Eingabevorrichtung mit einer Reihe veränderlicher Funktionstasten betrifft. Hierbei war es vorgesehen, eine Stellwalze zu verwenden, mit deren Hilfe einer Reihe von hierfür speziell vorgesehenen Funktionstasten unterschiedliche Funktionen zugeordnet werden können. Je nach Stellung der Walze erhält jede der Tasten eine andere Funktion, welche auf der Walze, welche hinter einem Sichtfenster vorbeigeführt wird, dargestellt sind. Durch ein Drehen der fraglichen Walze wird also neben einer Änderung der Funktionen auch eine Änderung der oberhalb der fraglichen Tasten angeordneten Anzeige bewirkt.

Eine abermalige Weiterentwicklung ergibt sich aus der deutschen Patentanmeldung DE 35 32 327 A1, welche einen Schreibautomaten mit veränderlichen Tasten betrifft. Hierbei ist vorgesehen, dass die einzelnen Tasten Segmentanzeigen aufweisen, welche den jeweils eingestellten Wert der einzelnen Tasten repräsentieren sollen. Das Vorsehen derartiger Segmentanzeigen schränkt allerdings die Möglichkeiten darstellbarer Zeichen für die einzelnen Tasten relativ stark ein.

Deutlich freiere Möglichkeiten sind gemäß der deutschen Patentschrift DE 10 2005 025 301 B4 gegeben, welche eine Eingabevorrichtung vorsieht, die beispielsweise zur Hälfte aus einer herkömmlichen Tastatur und zur anderen Hälfte aus einem Touchscreen-Bereich bestehen kann. Hierbei ist vorgesehen, den Touchscreen-Bereich durch die Anzeige einer geeigneten Tastatur auf dem fraglichen Bereich als Erweiterung der vorhandenen Tastatur zu nutzen und auf diese Weise ein Tastenfeld variabler Einteilung und variabler Nutzung vorzusehen.

Schließlich ist ebenfalls aus diesem Bereich die deutsche Patentanmeldung DE 10 2007 016 703 A1 vorbekannt, welche ein medizinisches Gerät mit einer Eingabevorrichtung betrifft. Im Rahmen der fraglichen Anmeldung ist vorgesehen, die auf dem Gerät vorhandenen Tasten bzw. den Bereich um diese Tasten herum mit einer Anzeige zu belegen, welche etwa mittels der bekannten elektronischen Tinte oder alternativ auch mittels eines LCD-Displays realisiert werden sollte.

Das System in der Patentanmeldung EP 0 196 929 bietet die Möglichkeit, unterschiedliche Karten innerhalb eines geschlossenen Systems zu verwenden und in eine Eingabevorrichtung einzuschieben. Die Benutzung einer Karte (Anzeigemittel) in verschiedene Systeme ist jedoch nicht vorgesehen.

Grundsätzlich besteht jedoch stets der Bedarf nach großer Anpassbarkeit, so dass die vorliegende Erfindung sich die Aufgabe stellt, eine Eingabevorrichtung zu schaffen, welche in hohem Maße an die Bedürfnisse des Benutzers anpassbar ist. Gelöst wird dies durch eine Eingabevorrichtung gemäß den Merkmalen des Hauptanspruchs, sowie durch eine Alternative Ausgestaltung dieser Eingabevorrichtung gemäß Anspruch 4. Weitere sinnvolle Ausgestaltungen dieser Eingabevorrichtungen können den Merkmalen der jeweiligen Unteransprüche entnommen werden.

Eine derartige Eingabevorrichtung kann beispielsweise sowohl eine Computertastatur, als auch ein integriertes Tastenfeld etwa in einer Fernbedienung, einem elektronischen Spiel oder in einem anderen, zu steuernden technischen Gerät sein. Eine derartige Tastatur besteht aus einem Tastenblock, der aus beliebig vielen, beliebig zusammengestellten Tasten und Tastenunterblöcken gebildet sein kann. Die Tasten dieses Tastenblocks sind transparent, so dass durch die Oberfläche der fraglichen Tasten der Blick des Benutzers auf ein darunter angeordnetes Anzeigemittel freigehalten ist. Das fragliche Anzeigemittel dient dazu, unterhalb der transparenten Tasten ein Zeichen, also beispielsweise einen Buchstaben oder ein Symbol, darzustellen, welchen bzw. welches der Benutzer dann mit der Funktion der darüber liegenden Taste in Verbindung bringen kann. So wird beispielsweise unterhalb der Buchstabentaste, welche mit dem Buchstaben "A" belegt werden soll, auf dem Anzeigemittel ein entsprechender Buchstabe "A" dargestellt sein.

Es ist jedoch bekannt, dass in unterschiedlichen Regionen unterschiedliche Layouts für Tastaturen bzw. Tastenfelder verwendet werden; so wird beispielsweise auf einer herkömmlichen Tastatur mit beispielsweise 105 Tasten eine Anzahl von Tasten vorhanden sein, welche stets die gleiche Funktion haben, jedoch auch eine Anzahl von Tasten, welche sich je nach Sprachvariante verändern. Um an dieser Stelle eine möglichst große Freiheit zu erhalten, ist das Anzeigemittel unterhalb des transparenten Tastenblocks von der Vorrichtung vorzugsweise lösbar ausgestaltet.

Es sind zwei grundsätzliche Alternativen der Erfindung vorgesehen, nämlich einerseits eine analoge Variante, welche ein Anzeigemittel in Form einer mit einem Tastaturlayout versehenen, beispielsweise bedruckten, beliebig geformten Platte umfasst, und andererseits eine digitale Variante, welche aus einem veränderlichen Displaymodul besteht. Die digitale Variante kann entweder ein lösbares oder ein unlösbar mit seinem Gehäuse verbundenes Anzeigemittel umfassen.

Die Herausnehmbarkeit und damit einhergehende Modularität der Erfindung bietet eine Reihe enormer Vorteile, die von den Gegenständen der Dokumente des Standes der Technik nicht erreicht werden können. Durch einen Austausch des gesamten Anzeigemittels kann auf einen Schlag die komplette Tastaturbelegung für den Betrachter geändert werden, so dass bei Betrieb der fraglichen Tastatur in einem anderssprachigen Gerät eine Umrüstung ohne weiteres stattfinden kann. Ebenso ist es auch vorgesehen, durch den Austausch eines oder mehrerer Tastenblöcke gegen einen anderen Tastenblock mit einer anderen Anzahl von Tasten zu einer Veränderung des Leistungsumfangs zu kommen, ohne dabei ein neues Gerät zu erwerben. Ebenso können generell alle Tasten auch einzeln ausgetauscht werden.

Die Herausnehmbarkeit analoger Anzeigemittel führt in diesem Fall dazu, dass entweder andere Anzeigemittel ersatzweise in der Eingabevorrichtung angeordnet werden können oder dass beispielsweise durch ein Umdrehen des Anzeigemittels auf eine alternative Gestaltung zurückgegriffen werden kann, die etwa auch digital sein kann. Es ist dadurch ferner möglich, den weitaus größten Teil einer Eingabevorrichtung vorzufertigen, worin die vollständigen Tasten enthalten sein können. Lediglich ein im Endzustand herausnehmbares Element, nämlich das Anzeigemittel, muss in eben diesem Endzustand hinzugefügt werden, um die Eingabevorrichtung abschließend zu individualisieren.

Dies bringt enorme Vorteile. Eingabevorrichtungen können dadurch in Bezug auf die Sprachengestaltung erst im "letzten Moment" festgelegt werden. Dies wird am Beispiel eines Herstellers erfindungsgemäßer Computer-Tastaturen deutlich: Dieser Hersteller muss lediglich eine einzige Sorte fertig montierter Tastaturen lagern, um ganz Europa mit all seinen Sprachen beliefern zu können. Auf Anfrage muss dann lediglich das jeweilige Anzeigemittel der gewünschten Sprache hinzugefügt werden, um die Lieferung fertig zu stellen. Ein Vorhalten von Geräten unterschiedlicher Sprachversionen kann entfallen, lediglich die Anzeigemittel müssen in den gewünschten Sprachversionen vorgehalten werden.

Zudem kann eine Kontaktierung mit einer Ausleseeinheit oder einem Anschlussmodul erfolgen, wenn dem Anzeigemittel ein Erkennungsmittel zugeordnet ist, welches das Tastaturlayout des Anzeigemittels auf der jeweils aktiven Seite der Platte charakterisiert. So kann beispielsweise das derart ausgestaltete Anzeigemittel der Ausleseeinheit bzw. dem Anschlussmodul mitteilen, dass es sich beispielsweise um ein deutsches Tastaturlayout handelt, was die Kommunikation zwischen Eingabevorrichtung und daran angeschlossenem System vereinfacht. Hierdurch muss keine separate Einstellung vorgenommen werden, welches Tastaturlayout gewünscht wird, vielmehr erfolgt die Auswahl hierdurch selbsttätig über auf der Eingabevorrichtung zugeordnete Systeme, beispielsweise im Falle einer Computertastatur über einen auf dem angeschlossenen System laufenden Treiber.

Das Erkennungsmittel kann hierbei etwa ein Datenspeicher sein, welcher einen auslesbaren, das Tastaturlayout charakterisierenden Code enthält. Es genügt jedoch als Erkennungsmittel auch beispielsweise ein Pin, welcher aufgrund seiner Anordnung einen bestimmten Stromkreis schließt und welcher durch das Einbringen des Anzeigemittels in die Eingabevorrichtung positioniert wird.

Um ganz auf eine Vorkonfektionierung der Tastatur zu verzichten, können zudem auch freie Anzeigemittel vorgesehen sein, die von Hand beschriftet werden können. Hierbei ist beispielsweise eine Ausführung vorgesehen, welche eine löschbare, z.B. abwaschbare, Platte verwendet, um mit einem wasserlöslichen Stift, Kreide oder sonstigen löschbaren Schreibmitteln die gewünschten Markierungen hinzuzufügen. Die Tasten können dann mittels einer Software im Hinblick auf ihre Funktion frei konfiguriert werden.

Eine weitere Ausgestaltung sieht eine Platte vor, welche schubladenartig ausgestaltet sein kann, so dass sie ein Fach zur Aufnahme eines Belegungsbogens mit einer aufgedruckten Tastaturbelegung aufweist. So kann lediglich der Belegungsbogen ausgetauscht werden und durch einen entweder selbst bedruckten oder vorbedruckten Belegungsbogen ersetzt werden. Im letzteren Fall kann der vorbedruckte Belegungsbogen ein Erkennungsmittel aufweisen, etwa in Form eines Chips, welcher eine Identifizierung der aufgedruckten Tastaturbelegung ermöglicht.

Die digitale Alternative geht einen Schritt weiter, indem das Anzeigemittel als digitales Displaymodul ausgestaltet wird, etwa als LED-, OLED- oder LCD-Anzeige, oder beliebig andere Anzeige in beliebiger Form.

Bei einem erfolgten Tastendruck, sowie bei entsprechenden Anforderungen aus dem mit der Eingabevorrichtung verbundenen System, prüft in besonders vorteilhafter Ausgestaltung die Ausleseeinheit, ob sich eine oder mehrere Tasten aufgrund der eingetroffenen Informationen verändern müssen. So werden beispielsweise beim Betätigen der Shift-Taste sämtliche zuvor als kleine Buchstaben dargestellten Zeichen nunmehr als große Buchstaben dargestellt. Eine derartige Anforderung aus dem System kann jedoch darin bestehen, dass im Falle eines Computersystems eine Software auf einen Tastendruck hin unterschiedliche Funktionen anbietet. Auch derartige Funktionen wie beispielsweise eine Speicherfunktion, welche mit einem Diskettensystem symbolisiert wird oder auch eine ÖffnungsFunktion, welche mit einem Pfeil oder ähnlichem darstellbar ist, können in dem Bereich einer für diese Funktionen vorgesehenen Taste dargestellt werden. Dies kann auch während der Eingabe erfolgen, so dass beispielsweise eine Änderung der Tastendarstellung lediglich solange erfolgt, wie die Shift-Taste gedrückt bleibt. Nach einem Loslassen würde dann jeweils wieder die vorige Darstellung zurückkehren.

Über einen Anschluss, mit welchem das Displaymodul mit einem Anschlussmodul verbunden ist, gibt eine über dieses Anschlussmodul mit dem Displaymodul verbundene Ausleseeinheit Befehle an das Displaymodul weiter, in welcher Form die Tastenbelegung auf dem Displaymodul dargestellt werden soll. Auch eine direkte Verbindung der Ausleseeinheit mit dem Displaymodul ist hierbei möglich. Hierzu verwertet die Ausleseeinheit die Informationen aus einem Klassifikationsmodul, welches dem Tastaturgehäuse und/oder dem Kontaktmodul zugeordnet ist. Dieses Klassifikationsmodul stellt einen Informationsspeicher dar, in welchem Informationen über die Verteilung der Tasten enthalten sind oder ein Code, mit dem eine der Eingabevorrichtung zugeordnete Treibersoftware die Eigenschaften der Tastatur ableiten kann. Hieraus leiten sich für das Displaymodul die Vorgaben für die Bereichsgröße der einzelnen Tasten ab, sowie deren durch das Anzeigemittel realisierte Beschriftung.

Beide Ausgestaltungen des Anzeigemittels haben ferner den besonderen Vorteil, dass ein- und dasselbe Anzeigemittel in verschiedene Arten von Tastaturen eingesetzt werden kann. So kann beispielsweise auf ein- und demselben Anzeigemittel nur durch Austausch des Gehäuses zunächst eine Computertastatur entstehen, im nächsten Moment aber auch eine Klaviertastatur oder eine Spezialtastatur, beispielsweise eine Spielekonsole, ein Steuergerät, ein medizinischer Apparat etc. Insbesondere im Falle eines analogen Anzeigemittels ist es hierbei möglich, dieses bedarfsweise auch nur teilweise in das jeweilige Gehäuse einzuschieben, etwa um nur die benötigten Teile des Anzeigemittels zu verwenden.

Ein derart herausnehmbares Anzeigemittel bietet zudem Vorteile bei der Entsorgung, indem eine einfache Trennung der Bestandteile des Gehäuses von der Elektronik des Anzeigemittels durch das Entnehmen des Anzeigemittels erfolgen kann. Mit Vorteil sind auch die übrigen elektronischen Komponenten wie z.B. die Ausleseeinheit und das Anschlussmodul von dem Gehäuse der Eingabevorrichtung trennbar. Umgekehrt ermöglicht diese Anordnung auch eine relativ freie Wahl der verwendeten Komponenten, erlaubt insbesondere den modularen Aufbau der Eingabevorrichtung nach den Wünschen des Benutzers.

Neben der Verwendung der Erfindung in üblichen Computertastaturen, wie oben beispielhaft ausgeführt, kann eine derartige Eingabevorrichtung auch in anderen Geräten eingesetzt werden, welche über eine Steuerungsmöglichkeit, insbesondere eine Tastatur, verfügen, etwa Mobiltelefone, Steuerungen für Spielekonsolen, oder Laptops.

Um eine möglichst gute Sicht auf die unterhalb des Tastenblocks liegenden Bereiche des Anzeigemittels zu erhalten, sowie für eine optimale Stabilität, ist es als Option vorgesehen, dass der Tastenblock auf einem Kontaktmodul aufgesetzt ist, auf welchem die einzelnen Tasten befestigt werden können. Die Befestigung kann dabei unter Zwischenlage von Kontaktschaltern erfolgen, welche durch ein Niederdrücken der fraglichen Taste betätigt werden. Die Kontaktschalter können dabei lediglich unterhalb des Randes der Tasten oder in deren Randbereich angeordnet sein, so dass das Vorhandensein der fraglichen Kontaktschalter die Sicht auf das darunterliegende Anzeigemittel nicht beeinträchtigt. Darüber hinaus können die Kontaktschalter in eine ebenfalls unterhalb des Randes der einzelnen Tasten vorgesehene Kapselung, vorzugsweise in Silikon, ganz oder teilweise, eingelegt sein, so dass das gesamte Kontaktmodul bzw. der Tastenblock als solches bei Bedarf vom Benutzer auf verschiedene Art gereinigt werden kann. Ein Kontakt von Waschwasser oder anderen Flüssigkeiten mit der Elektronik ist dadurch vermieden.

Soweit transparente oder optisch zumindest kaum wahrnehmbare Schalter verwendet werden, kann auch eine vollflächige Befestigung der Tasten auf dem Kontaktmodul realisiert werden.

Das Kontaktmodul als solches stellt einerseits eine Abstützung des Tastenblocks dar, andererseits überspannt das Kontaktmodul das Anzeigemittel, so dass es insoweit sinnvoll ist, zumindest unterhalb der Tasten das Kontaktmodul als transparente Platte auszugestalten. Durch eine derartige transparente Platte hindurch ist das Anzeigemittel stets erkennbar. In den Bereichen, in denen keine Tasten auf dem Kontaktmodul vorgesehen sind, kann entweder eine - gegebenenfalls auch vom Benutzer frei wählbare - Dekoration aufgebracht sein in Form einer Dekorschicht, die etwa durch Aufkleben, Aufdrucken oder anderweitiges Aufbringen vorgenommen wird, jedoch können auch weitere Bereiche neben den Tasten freigehalten werden, um durch diese Bereiche hindurch einen Blick auf das Anzeigemittel zu erhalten.

Die Konstruktion einer derartigen Anordnung kann ein zentrales Anschlussmodul vorsehen. Beispielsweise bei Betätigung einer Taste wird der Tastendruck registriert und die fragliche Information über eine Ausleseeinheit an das Anschlussmodul weitergeleitet. Dieses kann bedarfsweise die Informationen auswerten und/oder verarbeiten und an das der Eingabevorrichtung zugeordnete System weiterleiten.

Im Rahmen der Erfindung ist vorgesehen, entweder das Kontaktmodul selbst als Gehäusedeckel für die Eingabevorrichtung vorzusehen, oder etwa einen passenden Rahmen bzw. Gehäusedeckel aufzusetzen, welcher das Kontaktmodul unter Freilassung der darauf angeordneten Tasten übergreift.

Anstelle des Kontaktmoduls oder gleichzeitig zu diesem können auch andere Steuertechniken genutzt werden, basierend beispielsweise auf Touchscreen-Layern oder Noppen-Layern, welche bedarfsweise von heruntergedrückten Tasten, oder bei von Tasten freigehaltenen Bereichen der Eingabevorrichtung auch direkt manuell oder gestisch, betätigt werden können. Dies ist sowohl bei einem analogen als auch einem digitalen Anzeigemittel möglich.

Im Rahmen der Erfindung ist ebenfalls ausdrücklich vorgesehen, dass einzelne Tasten auch undurchsichtig und bedruckt sein können, ebenso wie dass das Displaymodul abschnittsweise als bedruckte Platte verwendet werden kann, indem einzelne Bereiche des Displaymoduls bedruckt sind.

Eine weitere Modularität der Erfindung ergibt sich dadurch, dass auch mehrere Anzeigemittel in einer Eingabevorrichtung zusammengefasst werden können. Diese werden mit einer gemeinsamen Ausleseeinheit datenverbunden, wobei sie bedarfsweise auch in unterschiedlichen Gehäusemodulen aufgenommen und ggf. mit unterschiedlichen Anschlussmodulen verbunden sein können.

Eine besondere Ausführung der Erfindung sieht eine Ausführung vor, wobei im Bereich des Kontaktmoduls ein Anzeigebereich freigehalten ist, unter dem das Displaymodul eine Taschenrechner-Anzeige realisiert. In diesem Fall ist vorgesehen, dass entweder die gesamte Eingabevorrichtung, oder Bereiche hiervon, wie beispielsweise ein Nummernblock, als Taschenrechner einsetzbar ist, dessen Operationen und Ergebnisse auf einem derart gebildeten Display dargestellt werden können. Die Tasten außerhalb des Nummernblocks können hierbei für mathematische Operationen reserviert oder auch frei programmiert sein.

Die Stromversorgung eines derartigen Taschenrechners kann so geregelt sein, dass diese entweder über stets Spannung führende Anschlüsse, wie beispielsweise einen USB-Anschluss realisiert wird, alternativ ist aber auch vorgesehen, einen Solarbetrieb oder auch einen Batteriebetrieb oder dergleichen zu realisieren.

In weiterer, vorteilhafter Ausgestaltung sind dem Anschlussmodul zu den oben diskutierten Modulen ferner Anschlussmittel hinzufügbar, welche die Funktionalität der Tastatur erweitern. So können weitere Anschlüsse sowie Peripheriegeräte anverbunden werden, beispielsweise zusätzliche USB-Anschlussmittel, über welche weitere Peripheriegeräte an die so entstehenden Anschlüsse anverbunden werden können. Auch ist ein Anschluss für einen weiteren Nummernblock auf diese Weise hinzufügbar, zusätzliche Tasten oder Tastenblöcke verschiedener Größen oder andere Drittgeräte sind ebenfalls anschließbar, beispielsweise um die Eingabevorrichtung zu einer Telefonanlage, Spielekonsole oder ähnliches umzufunktionieren bzw. zu erweitern.

Zudem erscheint es durchaus auch sinnvoll, den transparenten Tasten im Bereich ihrer Oberfläche eine optisch wirksame Gestaltung zu geben, um so die Möglichkeit zu bieten, das darunterliegende Anzeigemittel beispielsweise über einen Lupeneffekt vergrößert darzustellen und somit die Sichtbarkeit für den Betrachter zu verbessern.

Ergänzend zu den oben genannten Eingabevorrichtungen ist speziell auf die Möglichkeit zu verweisen, das Anzeigemittel, sei es analog oder digital, in einem Gerät mit Drucksensoren zu nutzen, um es beispielsweise als Musikinstrument zu verwenden. Bei Musikinstrumenten ist weitgehend nicht nur der Druck einer Taste von Interesse, sondern genauso auch die Anschlagstärke, mit welcher der Tastendruck erfolgt. Je nach Stärke des Drucks kann die Lautstärke und/oder die Dynamik des Musikinstruments, wie dies von analogen Instrumenten vorgegeben wird, beeinflusst werden. Um diesen Effekt nachzubilden, sind mit Vorteil den Eingabeelementen mittels eines Drucksensormoduls Drucksensoren zuzuordnen, welche die Anschlaghärte der einzelnen Tasten empfangen und an die Ausleseeinheit weitermelden.

Schließlich stellt es einen enormen Vorteil der erfindungsgemäßen Eingabevorrichtung dar, dass das Anzeigemittel entnehmbar ist. Bei regelmäßigem Gebrauch einer Tastatur ist es unvermeidbar, dass Schmutz oder zumindest Staub in die Tastatur eindringt und sich auf den Tasten absetzt und mit der Zeit ein sehr unschönes Bild abgibt. Eine Reinigung herkömmlicher Tastaturen ist durch die erforderliche Trennung der dem Schmutz ausgesetzten Tasten von den elektronischen Komponenten der Tastatur sehr aufwändig, da die Tasten zunächst einzeln entfernt und schließlich in der korrekten Anordnung wieder zusammengesetzt werden müssen. Zudem wäscht sich die Beschriftung der einzelnen Tasten mit der Zeit ab.

Dies entfällt bei der erfindungsgemäßen Eingabevorrichtung, wenn zur Reinigung das Anzeigemittel entfernt wird. In diesem Zustand kann die Eingabevorrichtung am Stück einer Reinigung beispielsweise in einem Spülautomaten zugeführt werden, ohne dass die Gefahr bestünde, eine Beschriftung oder funktionale Teile der Tasten dabei zu beschädigen. Im Hinblick auf die neben dem Anzeigemittel vorhandene Elektronik kann diese beispielsweise entweder so wasserdicht gekapselt ausgeführt sein, dass sie in der Eingabevorrichtung verbleiben kann, oder aber ebenfalls entnehmbar in dem Gehäuse der Eingabevorrichtung aufgenommen sein.

Die vorstehend beschriebene Erfindung wird im Folgenden anhand eines Ausführungsbeispiels näher erläutert.

Es zeigen:
- Figur 1: den schematischen Aufbau einer erfindungsgemäßen Eingabevorrichtung in einer perspektivischen Schnittdarstellung,
- Figur 2: ein Funktionsschema der erfindungsgemäßen Eingabevorrichtung, und
- Figur 3: eine erfindungsgemäße Eingabevorrichtung in einer Draufsicht.

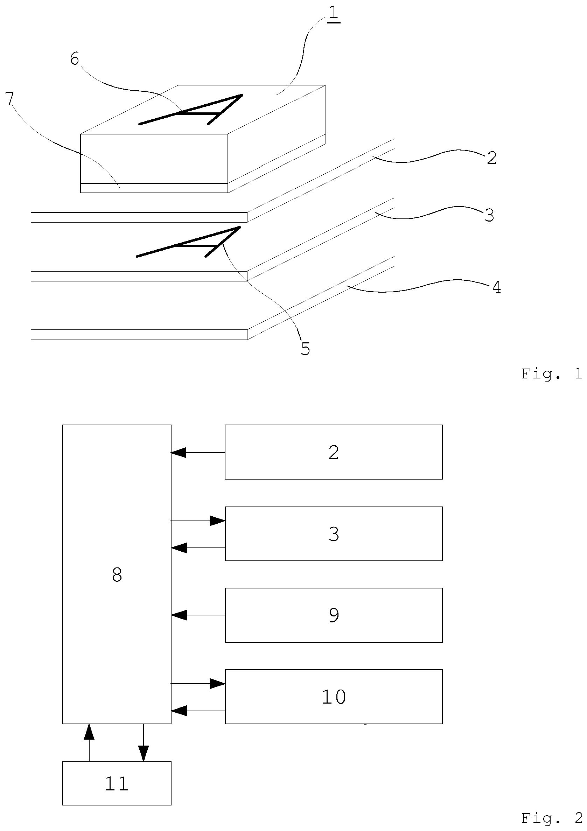

Figur 1 zeigt den Aufbau einer Eingabevorrichtung, bestehend im wesentlichen aus einem Kontaktmodul 2, welches als Grundplatte für die Anordnung einer Reihe von Tasten 1 dient, und einem darunterliegenden Displaymodul 3. Das Kontaktmodul 2 dient als Unterstützung des Tastenblocks für den Aufbau der Eingabevorrichtung, indem auf dem Kontaktmodul 2 die Tasten 1 unter Zwischenlage von in Silikon gekapselten Kontaktschaltern 7 angeordnet sind. Durch einen Druck auf die Taste 1 wird der Kontaktschalter 7 zusammengedrückt und bewirkt einen elektrischen Impuls, welcher über geeignete Leitungen des Kontaktmoduls 2 zu einer Ausleseeinheit 8 weitergeleitet wird. Die Kontaktschalter 7 sind hierbei deshalb in Silikon gekapselt, um einerseits die Federung der Taste 1 zu verbessern und andererseits eine Konstruktion zu schaffen, welche ohne weiteres mit Wasser beaufschlagbar ist. Die Taste 1 ist ebenfalls, wie auch der darunterliegende Bereich des Kontaktmoduls 2 transparent, so dass an der Oberfläche der Taste 1 das Bildzeichen 6 eines auf dem Displaymodul 3 dargestellten Zeichens 5 erkennbar ist. Dieses Bildzeichen 6 kann hierbei unter Verwendung des Linseneffekts, welcher durch eine linsenförmige Ausgestaltung der Oberfläche der Taste 1 oder auch des darunterliegenden Bereichs des Kontaktmoduls 2 bewirkt werden kann, nach Bedarf vergrößert werden um die Sichtbarkeit für den Benutzer zu verbessern.

Zum Einen hat diese Anordnung für den Benutzer den Vorteil, dass er mit einem entnehmbaren Displaymodul 3, welches auch in andere Tastaturen bzw. Eingabevorrichtung einsetzbar ist, die Tastenbelegungen solcher anderer Tastaturen ebenfalls steuern kann und dass der Benutzer insoweit lediglich ein Displaymodul benötigt, um verschiedenste Tastaturen zu bedienen. Zum Anderen bietet der Einsatz des Displaymoduls 3 die Möglichkeit, das auf der Taste 1 dargestellte Bildzeichen 6 nach Bedarf anzupassen, sobald dies durch die mit der Eingabevorrichtung bediente Software erforderlich wird. Sobald der fraglichen Taste 1 nunmehr eine andere Funktion als die Eingabe des Buchstabens "A" zugeordnet wird, so wird ein Symbol für diese neue Funktion auf dem Displaymodul 3 unterhalb der hierfür vorgesehenen Taste 1 angezeigt, so dass der Benutzer der Eingabevorrichtung das dann entsprechende Bildzeichen 6 auf der Taste sieht und sofort wahrnehmen kann, welche Funktion der jeweiligen Taste nunmehr vorbehalten ist.

Das Kontaktmodul 2 dient in dieser Ausgestaltungsform gleichzeitig als Gehäusedeckel, so dass um die Tasten 1 herum freier Raum mit einem ansprechenden Dekor bedruckt werden kann. An Positionen, wo Teile des Displaymoduls 3 als zusätzliche Anzeige dienen sollen, ist das Kontaktmodul 2 insoweit transparent zu halten, so dass der darunterliegende Bereich des Displaymoduls 3 für den Betrachter sichtbar bleibt.

Dem als Gehäusedeckel fungierenden Kontaktmodul 2 gegenüber ist ein Gehäuseboden 4 angeordnet, so dass zwischen dem Kontaktmodul 2 und dem Gehäuseboden 4 eine Aufnahme zum Einschieben bzw. Einlegen des Displaymoduls 3 freigehalten wird. Auf diese Weise kann das Displaymodul 3 ohne weiteres entnommen und in eine andere Tastatur eingebaut werden, umgekehrt ist es möglich, ein Anzeigemittel etwa in Form einer einfachen, bedruckten Platte für das Displaymodul einzusetzen, um eine nicht variable Tastaturbelegung vorzugeben.

Figur 2 zeigt ein Anschlussschema, in dessen Zentrum eine Ausleseeinheit 8 steht. Diese nimmt zum Einen von einem angeschlossenen Kontaktmodul 2 etwaige Eingaben des Benutzers entgegen und leitet diese an das System weiter, welches mit der Eingabevorrichtung verbunden ist, und gibt umgekehrt auf Anfragen des Systems bzw. in Reaktion auf Tasteneingaben des Kontaktmoduls 2 Anweisungen zur Darstellung der Tastenbelegung an das Displaymodul 3 weiter. Dem Gehäuse der verwendeten Tastatur, bzw. dem Kontaktmodul 2 mit den Tasten 1, ist ein Klassifikationsmodul 9 zugeordnet, welches ebenfalls an die Ausleseeinheit 8 angeschlossen ist und welchem unter anderem Grundinformationen über die Tastenverteilung der Tastatur zu entnehmen sind. So kann in diesem Klassifikationsmodul 9 beispielsweise die Information gespeichert sein, dass es sich bei der verwendeten Tastatur um eine Tastatur mit 105 Tasten handelt. Diese Information wird von der Ausleseeinheit 8 sowohl beim Auswerten der Tasteneingaben als auch bei der Darstellung der Tastenbelegung berücksichtigt. Über das der Ausleseeinheit 8 ebenfalls zugeordnete Anschlussmodul 10 ist es zudem möglich, zusätzliche Anschlussmittel an der Tastatur vorzusehen, um diese insoweit zum Universalgerät auszubauen. Insoweit ist vorliegend ein Anschlussmodul 10 und ein Schnittstellenmodul 11 vorgesehen, welche die hier betrachtete Eingabevorrichtung gleichzeitig zum USB-Hub ausbauen. Es soll an dieser Stelle nochmals darauf hingewiesen sein, dass neben oder anstelle der zentralen Ausleseeinheit 8 auch ggf. zusätzlich jedes der angeschlossenen Module eine eigene Ausleseeinheit aufweisen kann.

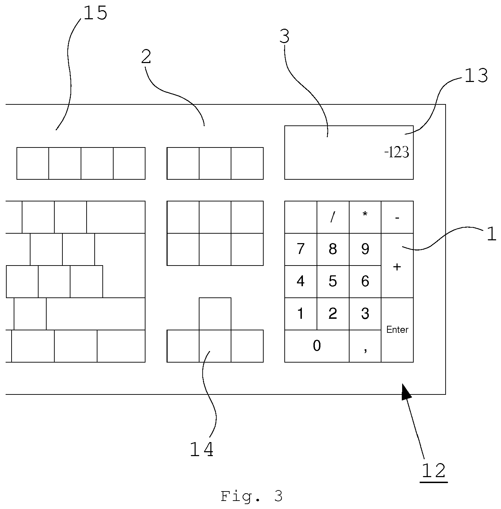

Figur 3 zeigt einen Abschnitt eines mit einem Tastenfeld belegten Kontaktmoduls 2, welches eine Sonderfunktion der Erfindung umsetzt. Aufgrund einer von dem angeschlossenen System unabhängigen Energieversorgung wird der Nummernblock der fraglichen Tastatur als Taschenrechner verwendet, wozu die gängigen Rechenoperationen, sowie die Ziffern auf dem unterhalb des dargestellten Kontaktmoduls 2 liegenden Displaymodul 3 dargestellt werden. Auf eine Darstellung der übrigen, ungenutzten Tasten 14 wird hierbei verzichtet, so dass diese für den Benutzer leer bleiben. Das Displaymodul 3 sieht in dieser Ausgestaltung einen Anzeigebereich 13 vor, auf welchem die Rechenoperationen des so entstandenen Taschenrechners dargestellt werden. Ausgeführt werden die Rechenoperationen von der Ausleseeinheit 8 der Eingabevorrichtung. Der Anzeigebereich 13 des Displaymoduls 3 wird von dem darüberliegenden Kontaktmodul 2, ebenfalls wie die Bereiche unterhalb der Tasten 1 freigehalten, um die Anzeige dort zu ermöglichen. Der übrige Bereich des Kontaktmoduls 2 steht als Dekorbereich zur freien Verfügung, kann also nach Belieben mit einem geeigneten, vom Benutzer gewünschten Dekor bedruckt, beklebt oder anderweitig beschichtet werden.

Vorstehend beschrieben ist somit eine Eingabevorrichtung, welche aufgrund ihrer Konstruktion äußerst anpassbar und hierdurch besonders günstig in der Herstellung sein kann. Dies wird dadurch erreicht, dass die jeweilige Tastaturbelegung abhängig von einem Anzeigemittel gemacht wird, welches unterhalb eines transparenten Tastenblocks eingefügt werden und bei Bedarf gegen ein alternatives Anzeigemittel ausgetauscht werden kann. Es kann ebenfalls im Fall eines als Displaymodul ausgestalteten Anzeigemittels der Gehäusekörper ausgetauscht und vollkommen andere Gehäuseformen und ein anderer Funktionsumfang zusammen mit dem Displaymodul verwendet werden.

### BEZUGSZEICHENLISTE

- 1: Taste
- 2: Kontaktmodul
- 3: Displaymodul
- 4: Gehäuseboden
- 5: Zeichen
- 6: Bildzeichen
- 7: Kontaktschalter
- 8: Ausleseeinheit
- 9: Klassifikationsmodul
- 10: Anschlussmodul
- 11: USB-Anschlussmittel
- 12: Nummernblock
- 13: Anzeigebereich
- 14: ungenutzte Tasten
- 15: Dekorbereich

## Patentansprüche

1. Eingabevorrichtung mit einem ein Anzeigemittel übergreifenden, transparenten Tastenblock bestehend aus einer Mehrzahl transparenter Tasten (1), wobei den Tasten (1) des Tastenblocks Funktionen zugeordnet sind, welche mithilfe von unter der jeweiligen Taste (1) auf einem dieser zugeordneten Bereich des Anzeigemittels dargestellten Zeichen (5) repräsentiert werden, und wobei der Tastenblock und das Anzeigemittel in einem gemeinsamen Gehäuse aufgenommen sind und das Anzeigemittel der Eingabevorrichtung über einen Einschub lösbar zugeordnet ist, **dadurch gekennzeichnet, dass**
das Anzeigemittel ein Erkennungsmittel aufweist, das einen die Tastaturbelegung charakterisierenden Code umfasst, der von einer Ausleseeinheit der Eingabevorrichtung auslesbar ist,
das Erkennungsmittel des Anzeigemittels mit der Ausleseeinheit der Eingabevorrichtung verbunden ist und derart kommuniziert, dass Tastenfunktionen bestimmt werden können, so dass ein Anzeigemittel verschiedene Eingabevorrichtungen bedienen kann.

2. Vorrichtung nach Anspruch 1, **dadurch gekennzeichnet, dass** das Gehäuse eines aus einer Mehrzahl unterschiedlicher Gehäuse für unterschiedliche Tastaturen ist, die derart ausgebildet sind, dass ein- und dasselbe Anzeigemittel in verschiedene Arten von Eingabevorrichtungen mit unterschiedlichen Gehäusen eingesetzt werden kann.

3. Vorrichtung nach Anspruch 1, **dadurch gekennzeichnet, dass** das Anzeigemittel ein veränderliches digitales Displaymodul (3) ist, wobei das Displaymodul (3) bevorzugt derart mit der Eingabevorrichtung kommuniziert, dass Tastaturbelegungen gesteuert werden können.

4. Vorrichtung gemäß Anspruch 3, **dadurch gekennzeichnet, dass** das Anzeigemittel zumindest bereichsweise in Form einer Digitalanzeige ist, welches unterhalb von Tasten (1) des Tastenblocks Zeichen zur Repräsentation einer Funktion der jeweiligen Taste (1) anzeigt.

5. Vorrichtung nach einem der vorhergehenden Ansprüche, **dadurch gekennzeichnet, dass** der Tastenblock lösbar ist und gegen einen anderen Tastenblock ausgetauscht werden kann.

6. Vorrichtung nach einem der Ansprüche 3 bis 5, **dadurch gekennzeichnet, dass** das Anzeigemittel derart veränderbar ist, dass mit dem einen Displaymodul (3) in Abhängigkeit von dem Gehäuse der Eingabevorrichtung ein anderer Funktionsumfang realisiert wird.

7. Vorrichtung nach einem der Ansprüche 3 bis 6, **dadurch gekennzeichnet, dass** das Displaymodul (3) von einem Kontaktmodul überspannt wird, dass unterhalb der Tasten und in einem weiteren Bereich außerhalb der Tasten transparent ist, und das Displaymodul (3) einen Anzeigebereich (13) aufweist, der von dem darüberliegenden Kontaktmodul freigehalten wird, um eine Anzeige des Anzeigebereichs des Displaymoduls (3) zu ermöglichen.

8. Vorrichtung nach einem der vorhergehenden Ansprüche, **dadurch gekennzeichnet, dass** der Tastenblock auf einem Kontaktmodul (2) aufgesetzt ist, wobei das Kontaktmodul (2) mit einer Ausleseeinheit (8) datenverbunden ist, welche Informationen über die Betätigung von Tasten (1) des Tastenblocks vom Kontaktmodul (2) empfängt.

9. Vorrichtung nach einem der vorhergehenden Ansprüche, **dadurch gekennzeichnet, dass** das Tastaturgehäuse und/oder ein Kontaktmodul (2), auf dem die Tasten (1) aufgesetzt sind, ein mit einer Ausleseeinheit (8) verbindbares Klassifikationsmodul (9) aufweist, welches der Ausleseeinheit (8) unter anderem Informationen betreffend die Tastenverteilung der Eingabevorrichtung bereitstellt.

10. Vorrichtung gemäß Anspruch 7, **dadurch gekennzeichnet, dass** das Displaymodul (3) über ein Anschlussmodul (10) mit der Ausleseeinheit (8) verbunden ist und eine Ansteuerung des Displaymoduls (3) anhand der Ausleseeinheit (8) zur Verfügung stehender Informationen entsprechend dem vorliegenden Tastaturtyp erfolgt, wobei vorzugsweise die Ausleseeinheit (8) bei einem Tastendruck und/oder bei Anforderungen aus einem mit der Eingabevorrichtung verbundenen System prüft, ob sich die Funktion der jeweiligen Taste (1) dadurch ändern soll, und in diesem Fall das Displaymodul (3) zur Darstellung eines diese geänderte Funktion repräsentierenden Zeichens (5) in dem der betroffenen Taste (1) zugeordneten Bereich des Displaymoduls (3) angesteuert wird.

11. Vorrichtung gemäß einem der Ansprüche 3 bis 10, **dadurch gekennzeichnet, dass** das digitale Displaymodul rückseitig mit einer Tastenbelegung bedruckt ist.

12. Vorrichtung gemäß einem der vorhergehenden Ansprüche, **dadurch gekennzeichnet, dass** dem Anzeigemittel ein Touchscreen-Layer, ein Noppen-Layer oder eine andere Steuerungstechnologie zugeordnet ist, wobei die Tasten (1), vorzugsweise mit ihren Tastenrändern, direkt oder indirekt auf den entsprechenden Layer einwirken.

13. Vorrichtung gemäß einem der vorhergehenden Ansprüche 3 bis 12 mit mehreren Anzeigemitteln, welche unterschiedlichen Tastenblöcken oder unterschiedlichen Teilen eines Tastenblocks zugeordnet sind, wobei vorzugsweise mehrere Anzeigemittel in separaten, miteinander verbindbaren Gehäusemodulen aufgenommen sind, welche Tastenblockmodule aufweisen, die zu einem gemeinsamen Tastenblock kombinierbar sind und hierbei höchst vorzugsweise mehrere Anzeigemittel mit einer gemeinsamen Ausleseeinheit (8) zum Zwecke des Datenaustauschs verbindbar sind.

14. Vorrichtung gemäß einem der vorhergehenden Ansprüche 3 bis 13, **dadurch gekennzeichnet, dass** das Displaymodul (3) über ein Anschlussmodul (10) mit der Ausleseeinheit (8) verbunden ist und dem Anschlussmodul (10) Anschlussmittel zur Erweiterung der Funktionalität, insbesondere Anschlussmittel für einen zweiten Nummernblock, zusätzliche Tasten oder Tastenblöcke, für Drittgeräte oder USB-Anschlussmittel (11), anverbindbar sind.

15. Vorrichtung gemäß einem der vorhergehenden Ansprüche, 7 bis 10 **dadurch gekennzeichnet, dass** den Tasten (1) Drucksensoren zur Erfassung der Anschlagstärke zugeordnet sind und Informationen darüber an die Ausleseeinheit (8) übermitteln, wobei vorzugsweise die Drucksensoren einem, vorzugsweise transparenten, in den Tasten selbst, im Anzeigemittel, unter oder über dem Anzeigemittel oder zwischen den Tasten und dem Anzeigemittel liegenden Drucksensormodul zugeordnet sind oder, soweit ein solches vorhanden ist, auf dem Kontaktmodul aufgenommen sind.

## Claims

1. Input device with a transparent keypad situated above a representation means, wherein the keypad consists of a multitude of transparent keys (1) and functions are mapped to the keys (1) of the keypad, the functions being represented by means of symbols (5) which are displayed within an area on the representation means assigned to the respective keys and situated beneath the respective keys (1), and wherein the keypad and the representation means are integrated in a common casing, and wherein the representation means is detachably associated to the input device by means of a slot
**characterized in that**
the representation means has a recognition means which holds a code that characterizes the keyboard layout and which can be read out by a readout device of the input device,
the recognition means of the representation means is connected to the readout device of the input device and communicates with the readout device in such a way that key functions can be determined so that one representation means can operate several input devices.

2. Device according to claim 1, **characterized in that** the casing is one of a plurality of different casings for different keyboards, which are adapted in such a manner that one and the same representation means can be used in different types of input devices with different casings.

3. Device according to claim 1, **characterized in that** the representation means is a changeable digital display module (3), wherein the display module (3) preferably communicates with the input device in such a way that the keyboard layouts can be controlled.

4. Device according to claim 3, **characterized in that** the representation means is, at least in part, formed as a digital display module, which displays symbols underneath the keys (1) of the keypad representing the functions of the respective keys (1).

5. Device according to any one of the preceding claims, **characterized in that** the keypad is detachable and can be exchanged for another keypad.

6. Device according to one of the claims 3 to 5, **characterized in that** the representation means is modifiable in such a manner that, depending on the casing of the input device, a different range of functions can be realized using the one display module (3).

7. Device according to one of the claims 3 to 6, **characterized in that** the display module (3) is spanned by a contact module that is transparent underneath the keys and in another area outside the keys, and **in that** the display module (3) comprises a representation area (13), which is kept free by the contact module situated above the representation area (13) in order to enable a display of the representation area of the display module (3).

8. Device according to any one of the preceding claims, **characterized in that** the keypad is attached on a contact module (2), wherein the contact module (2) is data-connected with a readout device (8), which receives information on the stroking of keys (1) of the keypad from the contact module (2).

9. Device according to any one of the preceding claims, **characterized in that** the keyboard casing and/or a contact module (2), onto which the keys (1) are attached, comprises a classification module (9) that is attachable to a readout device (8), wherein the classification module (9) provides the readout device (8), inter alia, with information regarding the arrangement of keys on the input device.

10. Device according to claim 7, **characterized in that** the display module (3) is connected via a connection module (10) to the readout device (8), and control of the display module (3) is performed using the information available from the readout device (8) regarding the present keyboard type, wherein preferably the readout device (8) listens for a keystroke and/or a request by a system connected to the input device and evaluates whether the function of the respective key (1) needs to be changed accordingly, and in this case the display module (3) shall be accessed for the purpose of displaying a symbol (5) that represents the changed function in the area of the display module (3) assigned to the respective key (1).

11. Device according to any one of the claims 3 to 10, **characterized in that** a key assignment is printed onto the back of the digital display module.

12. Device according to any one of the preceding claims, **characterized in that** a touch screen layer, a knob layer or another control technology is assigned to the representation means, wherein the keys (1) directly or indirectly interact with the respective layer, preferably by means of their edges.

13. Device according any one of the preceding claims 3 to 12 with multiple representation means which are assigned to different keypads or different parts of a keypad, wherein preferably multiple representation means are integrated in separate casing modules, which can be connected to each other and possess keypad modules that can be combined into one keypad, and wherein highly preferably multiple representation means can be connected to a common readout device (8) for the purpose of data exchange.

14. Device according to any one of the preceding claims 3 to 13, **characterized in that** the display module (3) is connected to the readout device (8) via a connection module (10) that may be connected to connection means for extending the functionality, especially connection means for a second number pad, additional keys or keypads, for third-party devices or USB connectors (11).

15. Device according to any one of the preceding claims 7 to 10, **characterized in that** pressure sensors are assigned to the keys (1) for the purpose of registering the force of key strokes and transferring the information obtained thereby to the readout device (8), wherein preferably the pressure sensors are assigned to a pressure sensor module which is preferably transparent, located inside the keys, in the representation means, under or above the representation means or between the keys and the representation means, or which, in the case that there is a contact module present, are located on the contact module.

## Revendications

1. Dispositif de saisie avec un bloc de touches transparent chevauchant un moyen d'affichage se composant d'une pluralité de touches transparentes (1), dans lequel des fonctions sont associées aux touches (1) du bloc de touches, lesquelles fonctions sont représentées à l'aide de symboles (5) indiqués sous la touche (1) respective sur une zone du moyen d'affichage associée à celle-ci, et dans lequel le bloc de touches et le moyen d'affichage sont intégrés dans un boîtier commun et le moyen d'affichage est associé de manière amovible au dispositif de saisie via un élément insérable, **caractérisé en ce que**
le moyen d'affichage présente un moyen de reconnaissance qui comprend un code caractérisant la disposition des touches, lequel code peut être lu par une unité de lecture du dispositif de saisie,
le moyen de reconnaissance du moyen d'affichage est relié à l'unité de lecture du dispositif de saisie et communique de telle sorte que des fonctions de touche peuvent être définies, de sorte qu'un moyen d'affichage peut commander différents dispositifs de saisie.

2. Dispositif selon la revendication 1, **caractérisé en ce que** le boîtier est un boîtier différent d'une pluralité pour différents claviers, qui sont configurés de telle sorte qu'un seul et même moyen d'affichage peut être mis en oeuvre de différentes façons par des dispositifs de saisie avec différents boîtiers.

3. Dispositif selon la revendication 1, **caractérisé en ce que** le moyen d'affichage est un module d'affichage numérique variable (3), dans lequel le module d'affichage (3) communique de préférence avec le dispositif de saisie de telle sorte que des disposition de touches peuvent être commandées.

4. Dispositif selon la revendication 3, **caractérisé en ce que** le moyen d'affichage est au moins par endroits en forme d'affichage numérique, lequel moyen d'affichage affiche en dessous de touches (1) du bloc de touches des symboles destinés à la représentation d'une fonction de la touche (1) respective.

5. Dispositif selon l'une des revendications précédentes, **caractérisé en ce que** le bloc de touches est amovible et peut être échangé contre un autre bloc de touches.

6. Dispositif selon l'une des revendications 3 à 5, **caractérisé en ce que** le moyen d'affichage est modifiable de telle sorte qu'un autre champ de fonction est réalisé avec un module d'affichage (3) en fonction du boîtier du dispositif de saisie.

7. Dispositif selon l'une des revendications 3 à 6, **caractérisé en ce que** le module d'affichage (3) est superposé avec un module de contact, **en ce qu'**il est transparent en dessous des touches et dans une autre zone à l'extérieur des touches, et le module d'affichage (3) présente une zone d'affichage (13) qui est libérée par le module de contact qui se trouve dessus pour permettre un affichage de la zone d'affichage du module d'affichage (3).

8. Dispositif selon l'une des revendications précédentes, **caractérisé en ce que** le bloc de touches est posé sur un module de contact (2), dans lequel le module de contact (2) est relié par données à une unité de lecture (8), qui reçoit des informations concernant l'actionnement de touches (1) du bloc de touches par le module de contact (2).

9. Dispositif selon l'une des revendications précédentes, **caractérisé en ce que** le boîtier de clavier et/ou un module de contact (2), sur lequel sont posées les touches (1), présente un module de classification (9) qui peut être relié à une unité de lecture (8), lequel module met à disposition de l'unité de lecture (8) entre autres des informations concernant la répartition des touches du dispositif de saisie.

10. Dispositif selon la revendication 7, **caractérisé en ce que** le module d'affichage (3) est relié à l'unité de lecture (8) par l'intermédiaire d'un module de connexion (10), et une commande du module d'affichage (3) s'opère à l'aide de l'unité de lecture (8) pour la mise à disposition d'informations disponibles conformément au type de clavier présent, dans lequel de préférence l'unité de lecture (8) vérifie lorsque l'on appuie sur une touche et/ou lors de demandes émanant d'un système relié au dispositif de saisie si la fonction de la touche (1) respective doit par conséquent être modifiée, et dans ce cas le module d'affichage est commandé pour la représentation d'un symbole (5) représentant cette fonction modifiée dans la zone du module d'affichage (3) associée à la touche (1) concernée.

11. Dispositif selon l'une des revendications 3 à 10, **caractérisé en ce que** l'on appuie à l'arrière du module d'affichage numérique avec une disposition de touches.

12. Dispositif selon l'une des revendications précédentes, **caractérisé en ce qu'**est associée au moyen d'affichage une couche d'écran tactile, une couche de boutons ou une autre technologie de commande, dans lequel les touches (1) agissent de préférence directement ou indirectement sur la couche correspondante, de préférence avec leurs bords de touche.

13. Dispositif selon l'une des revendications précédentes 3 à 12 avec plusieurs moyens d'affichage, lesquels sont associés à différents blocs de touches ou différentes parties d'un bloc de touches, dans lequel de préférence plusieurs moyens d'affichage sont intégrés dans des modules de boîtier séparés et pouvant être reliés les uns aux autres, lesquels présentent des modules de blocs de touches qui peuvent être combinés avec un bloc de touches commun et en l'occurrence le plus préférablement plusieurs moyens d'affichage peuvent être reliés à une unité de lecture (8) commune afin d'échanger des données.

14. Dispositif selon l'une des revendications précédentes 3 à 13, **caractérisé en ce que** le module d'affichage (3) est relié par l'intermédiaire d'un module de connexion (10) à l'unité de lecture (8) et des moyens de connexion destinés à l'extension de la fonctionnalité, en particulier des moyens de connexion pour un deuxième bloc numérique, des touches ou des blocs de touches supplémentaires, pour des appareils tiers ou des moyens de connexion USB (11) peuvent être connectés au module de connexion (10).

15. Dispositif selon l'une des revendications précédentes 7 à 10, **caractérisé en ce que** des capteurs de pression destinés à l'acquisition de la puissance de frappe sont associés aux touches (1) et transmettent des informations à ce sujet à l'unité de lecture (8), dans lequel de préférence les capteurs de pression sont associés à un module de capteur de pression de préférence transparent, qui se trouve dans les touches ellesmêmes, dans le moyen d'affichage, en dessous ou au-dessus du moyen d'affichage ou entre les touches et le moyen d'affichage ou, dans la mesure où une telle configuration est présente, sont intégrés au module de contact.
